# EUROPÄISCHE PATENTSCHRIFT

(11) **EP 1 877 338 B1**
(45) Veröffentlichungstag und Bekanntmachung des Hinweises auf die Patenterteilung: **31.07.2013**
(21) Anmeldenummer: 06701636.0
(22) Anmeldetag: 06.02.2006
(51) Int. Cl.: C01B 31/12, B01D 53/02, B01J 20/20

(54) **FILTERMATERIAL FÜR DIE ADSORPTION VON SCHADSTOFFEN AUS ATEMLUFT**
FILTER MATERIAL FOR THE ADSORPTION OF POLLUTANTS FROM BREATHING GAS
MATIERE DE FILTRAGE POUR L'ADSORPTION DE POLLUANTS PRESENTS DANS L'AIR AMBIANT

(30) Priorität: 06.05.2005 CH 7992005; 11.08.2005 CH 13222005
(43) Veröffentlichungstag der Anmeldung: 16.01.2008
(73) Patentinhaber: Dr. P. Pleisch AG, 8344 Bäretswil (CH)
(72) Erfinder: PLEISCH, Peter, CH-8330 Pfäffikon (CH); MEISTER, Jens, CH-8344 Bäretswil (CH)
(74) Vertreter: Frei Patent Attorneys
(86) Internationale Anmeldenummer: PCT/CH2006/000071
(87) Internationale Veröffentlichungsnummer: WO 2006/119654

(56) Entgegenhaltungen:
- EP-A- 0 405 404
- EP-A- 1 144 109
- WO-A-98/31460
- DE-C- 973 481
- US-A- 1 519 470
- US-A- 5 492 882

## Beschreibung

Die Erfindung liegt auf dem Gebiete der Luftreinigung und betrifft ein Filtermaterial auf der Basis von Aktivkohle nach dem Oberbegriff des unabhängigen Patentanspruchs. Das Filtermaterial gemäss Erfindung ist insbesondere geeignet für die Adsorption von Schadstoffen aus Atemluft, also für die Anwendung beispielsweise in Gasmasken oder in Filtern von Lüftungsanlagen.

Gemäss dem Stand der Technik wird Aktivkohle oder ein anderes Trägermaterial mit einer grossen Oberfläche pro Gewichtseinheit verwendet, um Filtermaterialien für beispielsweise Gasmasken herzustellen. Das Trägermaterial wird zu diesem Zwecke üblicherweise mit Metallen, beispielsweise in Form von Metalloxiden, Carbonaten oder Chloriden und gegebenenfalls mit zusätzlichen organischen Stoffen imprägniert, wodurch es eine erhöhte, gegebenenfalls spezifische Adsorptionsfähigkeit erhält, die mindestens teilweise darauf beruht, dass die Metalle chemische Umwandlungen der Schadstoffe katalysieren. Ein derartig imprägniertes Trägermaterial, insbesondere eine derart imprägnierte Aktivkohle eignet sich beispielsweise zur Entfernung von Schadstoffen wie Chlor, Chlorwasserstoff, Cyanwasserstoff, Schwefelwasserstoff, Tetrachlorkohlenstoff oder Ammoniak aus Atemluft.

Im zweiten Weltkrieg wurden in Gasmasken Filtermaterialien auf Aktivkohlebasis verwendet, wobei die Aktivkohle mit Kupfer, Silber und Chrom imprägniert war und dadurch insbesondere eine gute Wirksamkeit gegen Cyanwasserstoff, cyanogene Verbindungen und Arsine aufwiesen. Da Chrom⁺⁶ aber wegen seiner karzinogenen Eigenschaften und wegen seiner Wasserlöslichkeit aus ökologischen Gründen wenig erwünscht ist, wurde später versucht, Chrom⁺⁶ in den Imprägnierungsmitteln zu ersetzten.

Gemäss US-4801311 (Westvaco Corp.) wird anstelle von Chrom ein Vanadat oder Molybdat für die Imprägnierung von Aktivkohle verwendet, wobei die Aktivkohle zusätzlich Triethylendiamin und gegebenenfalls Tartarsäure enthält. Gemäss EP-0450414 (Drägerwerk) wird eine chromfreie Aktivkohle hergestellt durch Imprägnierung der Aktivkohle mit Kupfer und Zink sowie Wolframat oder Molybdat und gegebenenfalls Vanadat. Gemäss EP-0614400 (Calgon Carbon Corp.) wird eine chromfreie Aktivkohle hergestellt durch Imprägnierung der Aktivkohle mit Kupfer oder Zink sowie Molybdat und Sulfat. Gemäss den genannten Publikationen ist der Effekt der chromfreien Aktivkohlen so gut wie derjenige von mit Chrom imprägnierten Aktivkohlen, insbesondere betreffend Adsorption von Cyanwasserstoff und von cyanogenen Verbindungen und betreffend Lagerfähigkeit.

Auch die vorliegende Erfindung stellt sich die Aufgabe, ein chromfreies Filtermaterial auf der Basis von Aktivkohle zu schaffen, welches Filtermaterial sich für die Adsorption von Schadstoffen aus Atemluft eignet, insbesondere von Schadstoffen wie Chlor, Chlorwasserstoff, Cyanwasserstoff, Schwefelwasserstoff, Tetrachlorkohlenstoff und Ammoniak. Die Aktivkohle gemäss Erfindung soll gängigen Qualitätsanforderungen genügen und soll insbesondere eine gegenüber bekannten Aktivkohlen mit Chrom, die demselben Zwecke dienen, ein besseres Alterungsverhalten zeigen, also im wesentlichen länger lagerbar sein.

Diese Aufgabe wird gelöst durch das Filtermaterial, wie es in den Patentansprüchen definiert ist.

Die Basis des erfindungsgemässen Filtermaterials ist eine Aktivkohle, die für die Verwendung als Atemluftfilter geeignet ist, bevorzugterweise ist es eine aus Kokosnussschalen hergestellte Aktivkohle, die durch Behandlung in einem Drehrohrofen oder im Wirbelschichtverfahren mit Wasserdampf aktiviert wird. Die Körnung der Aktivkohle ist für die Erfindung nicht relevant. Diese Aktivkohle wird mit Zink und gegebenenfalls Kupfer imprägniert und kann ferner Triethylendiamin und Silber enthalten.

Die erfindungsgemässe Aktivkohle wird in an sich bekannter Weise hergestellt, das heisst durch Behandlung der noch nicht imprägnierten Aktivkohle, mit genannten Imprägnierungsbestandteilen und nachfolgender Wärmebehandlung. Die Imptägnierlösung enthält Zink und gegebenenfalls Kupfer als Oxyd, Carbonat oder Chlorid, und gegebenenfalls auch Triethylendiamin und Silber. Während der Wärmebehandlung wird Carbonat teilweise durch Oxid ersetzt. Die erfindungsgemässe Aktivkohle enthält als keines der bekannten Imprägnierungsmetalle Chrom, Molybdän, Nickel, Kobalt oder Vanadium.

Die Imprägnierlösung wird derart eingerichtet, dass in der imprägnierten Kohle Zink mit einem Gewichtsanteil von 2 bis 10%, bevorzugt 4 bis 9%, Kupfer mit einem Gewichtsanteil von 0 bis 3%, bevorzugt 0 bis 1%, Triethylendiamin mit einem Gewichtsanteil von 0 bis 3%, bevorzugt 0 bis 2% und Silber von 0 bis 2%, bevorzugt 0 bis 1%, vorhanden sind.

Es zeigt sich, dass das erfindungsgemässe Filtermaterial mit der oben genannten Zusammensetzung nicht nur gute, die gängigen Anforderungen leicht erfüllende Adsorptionseigenschaften aufweist, sondern sich auch durch eine sehr gute Lagerfähigkeit auszeichnet, wie dies in der folgenden Tabelle illustriert ist.

Das seit längerem im Handel erhältliche Produkt PLW K 7x16 (Handelsname der Firma Dr. P. Pleisch AG) mit Chrom⁺⁶ und ein auf einer gleichen Aktivkohle beruhendes, erfindungsgemässes Produkt, das kein Chrom enthält und mit den weiteren Imprägnierungsmitteln in den oben genannten, bevorzugten Mengen imprägniert wurde, einem gleichen Alterungsprozess ausgesetzt und anschliessend geprüft.

**Tabelle : Untersuchung Alterungsverhalten der chromfreien Imprägnierung**

| **Prüfstoffe** | **PLW K 7x16 (mit Chrom)** | **Erfindung (chromfrei)** |
|---|---|---|
| Chlorpikrin befeuchtet | 179 min | 179 min |
| Chlorpikrin gealtert | 147 min | 195 min |
| **Alterung in %** | **-18%** | **+ 8%** |
| Chlorcyan befeuchtet | 189 min | 182 min |
| Chlorzyan gealtert | 141 min | 182 min |
| **Alterung in %** | **-26%** | **± 0%** |
| Blausäure wie angeliefert | 327 min | 302 min |
| Blausäure gealtert | 224 min | 273 min |
| **Alterung in %** | **-32%** | **-10%** |

Die beiden Produkte wurden mit denselben Prüfverfahren und Prüfbedingungen untersucht. Es geht hier nicht um die Darstellung eines Leistungsvergleichs, sondern nur um einen Vergleich des Alterungsverhaltens dieser Produkte. Aus dieser Untersuchung geht hervor, dass das Alterungsverhalten der Aktivkohle mit der chromfreien Imprägnierung ein wesentlich besseres Alterungsverhalten aufweist als jene die mit Chrom imprägniert wurde.

## Patentansprüche

1. Filtermaterial für die Entfernung von Schadstoffen aus Atemluft, welches Filtermaterial eine durch Imprägnierung metallhaltig Aktivkohle ist, welche als Imprägnierungs-Metalle Zink oder Zink und Kupfer enthält, aber kein Chrom, kein Molybdän, kein Nickel, kein Vanadium und kein Kobalt, **dadurch gekennzeichnet, dass** die Aktivkohle aus Kokosnussschalen hergestellt ist und in einem Drehrohrofen oder im Wirbelschichtverfahren mit Wasserdampf aktiviert ist.

2. Filtermaterial nach Anspruch 1, **dadurch gekennzeichnet, dass** es ferner Triethylendiamin enthält.

3. Filtermaterial nach einem der Ansprüche 1 bis 2, **dadurch gekennzeichnct,** dass es ferner Silber enthält.

4. Filtermaterial nach einem der Ansprüche 1 bis 4, **dadurch gekennzeichnet, dass** es Zink mit einem Gewichtsanteil von 2 bis 10%, Kupfer mit einem Gewichtsanteil von 0 bis 3%, Triethylendiamin mit einem Gewichtsanteil von 0 bis 3% und Silber mit einem Gewichtsanteil von 0 bis 2% enthält.

5. Filtermaterial nach einem der Ansprüche 1 bis 4, **dadurch gekennzeichnet, dass** es Zink mit einem Gewichtsanteil von 4 bis 9%, Kupfer mit einem Gewichtsanteil von 0 bis 1%, Triethylendiamin mit einem Gewichtsanteil von 0 bis 2% und Silber mit einem Gewichtsanteil von 0 bis 1% enthält.

## Claims

1. A filter material for the removal of pollutants from breathing gas, which filter material is an metal containing activated carbon due to impregnation, which contains as an impregnation metal zinc or zinc and copper, but no chromium, no molybdenum, no nickel, no vanadium and no cobalt, **characterized in that** the activated carbon is made from coconut shells and activated in a rotary kiln or in a fluidized bed process with steam.

2. The filter material according to claim 1, **characterized in that** it also contains triethylenediamine.

3. The filter material according to one of the claims 1 to 2, **characterized in that** it also contains silver.

4. The filter material according to one of the claims 1 to 3, **characterized in that** it contains zinc with a proportion by weight of 2 to 10%, copper with a proportion by weight of 0 to 3%, triethylenediamine with a proportion by weight of 0 to 3% and silver with a proportion by weight of 0 to 2%.

5. The filter material according to one of the claims 1 to 4, **characterized in that** it contains zinc with a proportion by weight of 4 to 9%, copper with a proportion by weight of 0 to 1%, triethylenediamine with a proportion by weight of 0 to 2% and silver with a proportion by weight of 0 to 1%.

## Revendications

1. Matériau de filtration destiné à éliminer des substances nocives de l'air respiratoire, le matériau de filtration étant un charbon actif doté de métaux par imprégnation et qui contient comme métaux d'imprégnation du zinc ou du zinc et du cuivre mais pas de chrome, pas de molybdène, pas de nickel, pas de vanadium et pas de cobalt,
**caractérisé en ce que**
le charbon actif est fabriqué à partir de coques de noix de coco et est activé à la vapeur d'eau dans un four tubulaire rotatif ou par un procédé à lit fluidisé.

2. Matériau de filtration selon la revendication 1, **caractérisé en ce qu'**il contient en outre de la triéthylènediamine.

3. Matériau de filtration selon l'une des revendications 1 et 2, **caractérisé en ce qu'**il contient en outre de l'argent.

4. Matériau de filtration selon l'une des revendications 1 à 3, **caractérisé en ce qu'**il contient du zinc à une teneur en poids de 2à 10 %, du cuivre à une teneur en poids de 0 à 3 %, de la triéthylènediamine à une teneur en poids de 0 à 3 % et de l'argent à une teneur en poids de 0 à 2 %.

5. Matériau de filtration selon l'une des revendications 1 à 4, **caractérisé en ce qu'**il contient du zinc à une teneur en poids de 4 à 9 %, du cuivre à une teneur en poids de 0 à 1 %, de la triéthylènediamine à une teneur en poids de 0 à 2 % et de l'argent à une teneur en poids de 0 à 1 %.
